# EUROPEAN PATENT SPECIFICATION

(11) **EP 2 131 428 B1**
(45) Date of publication and mention of the grant of the patent: **19.10.2011**
(21) Application number: 08722372.3
(22) Date of filing: 18.03.2008
(51) Int. Cl.: H01M 8/00, B60L 11/18, H01M 8/04, H01M 10/44, H02J 7/00, H02J 7/34, H02M 3/00, H01M 16/00

(54) **FUEL CELL DEVICE**
BRENNSTOFFZELLENEINRICHTUNG
DISPOSITIF DE PILE À COMBUSTIBLE

(30) Priority: 23.03.2007 JP 2007076558; 12.03.2008 JP 2008062972
(43) Date of publication of application: 09.12.2009
(73) Proprietor: Honda Motor Co., Ltd., Minato-ku Tokyo 107-8556 (JP)
(72) Inventor: HIRAKAWA, Mitsuaki, Wako-shi Saitama 351-0193 (JP); FUJINO, Takeshi, Wako-shi Saitama 351-0193 (JP); NOGUCHI, Minoru, Wako-shi Saitama 351-0193 (JP); KOMAZAWA, Eisuke, Wako-shi Saitama 351-0193 (JP)
(74) Representative: Herzog, Markus
(86) International application number: PCT/JP2008/054978
(87) International publication number: WO 2008/123069

(56) References cited:
- EP-A1- 1 132 251
- JP-A- 2003 257 441
- JP-A- 2004 014 160
- JP-A- 2004 048 872
- JP-A- 2004 063 338
- JP-A- 2004 311 112
- JP-A- 2006 059 685
- JP-A- 2006 114 486
- JP-A- 2006 254 610
- JP-A- 2007 059 332
- JP-A- 2007 059 332
- US-A1- 2004 159 477

## Description

### Technical Field

The present invention relates to a fuel cell power supply device which supplies electric power to a load from a parallel circuit of a fuel cell and a capacitor.

### Description of the Related Art

Conventionally, as a power source for a fuel cell vehicle, there is known a fuel cell power supply device in which, for example, a fuel cell and a storage means (a capacitor, a secondary battery and the like) are connected in parallel to a driving motor, so as to supply electric power to the driving motor from the fuel cell and the storage means (for example, refer to Japanese Patent Application Laid-Open No. 2006-59685 (Pages 4-5, FIG. 1)).

In such conventional fuel cell power supply device, output units of the fuel cell and the storage means are directly connected to the driving motor. Further, because the output voltage per 1 cell of the fuel cell is low, it is necessary to configure a fuel cell stack in which a large number of cells are multilayered, in order to obtain high-voltage necessary for driving the driving motor, so that the volume of the fuel cell becomes large.

Further, in order to secure the driving electric power to a high-power driving motor, it is necessary to increase the capacity of the storage means which assists the output electricity of the fuel cell, so that the volume of the storage means also becomes large. And, because the volume of both the fuel cell and the storage means becomes large, it is difficult to downsize the fuel cell power supply device.

In JP 200-059332 A, as shown in Fig. 4, the charging of the lithium battery (41: 7 secondary battery) is carried out by supplying electric power to the lithium battery (41) from the fuel cell (40) via the first voltage boosting circuit (43).

Thus, the fuel cell and the secondary battery is connected only via the voltage boosting circuit (43).

### SUMMARY OF THE INVENTION

The present invention has been made in view of the above circumstances, and an object to be solved by the present invention is to provide a fuel cell power supply device capable of downsizing the device while maintaining high output.

According to a first aspect of the present invention, there is provided a fuel cell power supply device, comprising: a fuel cell; a voltage boosting means having an input unit connected in parallel to the fuel cell and an output unit connected to a first load, which boosts an output voltage of the fuel cell and supplies electric power obtained from the boosted voltage to the first load; a storage means which is connected in parallel to the input unit or the output unit of the voltage boosting means; a secondary battery which is connected to the output unit of the voltage boosting means via a voltage conversion means; and an electric power supply control means which controls the operation of the voltage conversion means, in order to carry out the supply of electric power to the first load from the secondary battery via the voltage conversion means, and to carry out charging of the secondary battery by the supply of electric power to the secondary battery from the voltage boosting means via the voltage conversion means.

According to the present invention, the output voltage of the fuel cell is boosted by the voltage boosting means, and the electric power obtained from the boosted voltage is supplied to the first load. Therefore, it is possible to lower the output voltage of the fuel cell. Also, by doing so, it is possible to decrease the number of cells to be multilayered in the fuel cell, and to decrease the volume of the fuel cell.

Further, it is possible to supply electric power to the first load from the storage means, and also electric power is supplied to the first load from the secondary battery via the voltage conversion means by the electric power supply control means. By doing so, it is possible to assist the supply of electric power to the first load from the fuel cell with the output electric power from the storage means and the secondary battery. Therefore, it is possible to decrease the volume of the fuel cell. Further, the electric power supply control means charges the secondary battery by the supply of electric power to the secondary battery from the voltage boosting means via the voltage conversion means. By doing so, it is possible to secure the state of charge of the secondary battery.

Further, in the fuel cell power supply device of the present invention, the storage means is connected in parallel to the input unit of the voltage boosting means.

According to the present invention, the output voltage of the fuel cell and the output voltage of the storage means are boosted by the voltage boosting means, and electric power obtained from the boosted voltage is supplied to the first load. Therefore, it is possible to lower the output voltage of the storage means, and to decrease the volume of the storage means.

Further, the fuel cell power supply device of the present invention comprises a one-way energization means which enables energization to the storage means from the fuel cell, and which disables energization to the fuel cell from the storage means.

According to the present invention, it is possible to maintain the voltage between terminals of the storage means to be higher than the voltage between terminals of the fuel cell, by disabling energization to the fuel cell from the storage means by the one-way energization means. By doing so, it is possible to maintain the state where the state of charge of the storage means is high regardless of the operating state of the fuel cell.

Further, the fuel cell power supply device of the present invention comprises an electric power detecting means which detects a first electric power supplied to the first load from the fuel cell and the storage means via the voltage boosting means, wherein the electric power supply control means supplies a second electric power to the first load from the secondary battery via the voltage conversion means, when the first electric power is equal to or more than a predetermined electric power.

According to the present invention, the electric power supply control means operates the voltage conversion means so as to supply the second electric power to the first load from the secondary battery, when the first electric power supplied to the first load from the fuel cell and the storage means via the voltage boosting means becomes equal to or more than the predetermined electric power, and when there is a fear that the supply of electric power from the fuel cell and the storage means may be insufficient as the supply of electric power to the first load. By doing so, it is possible to suppress the situation where the supply of electric power to the first load becomes insufficient.

Further, the fuel cell power supply device of the present invention comprises an electric power detecting means which detects a first electric power supplied to the first load from the fuel cell and the storage means via the voltage boosting means, wherein the electric power supply control means supplies a second electric power to the first load from the secondary battery via the voltage conversion means, when a rate of increase of the first electric power is equal to or more than a predetermined level.

According to the present invention, the electric power supply control means operates the voltage conversion means so as to supply the second electric power to the first load from the secondary battery, when the rate of increase of the first electric power supplied to the first load from the fuel cell and the storage means via the voltage boosting means becomes equal to or more than the predetermined level, and when there is a fear that the supply of electric power from the fuel cell and the storage means may be insufficient as the supply of electric power to the first load from the delay in response of the fuel cell with respect to the increase in the first electric power. By doing so, it is possible to suppress the situation where the supply of electric power to the first load becomes insufficient. It may also be possible that the device is provided with a voltage detecting means which detects the output voltage of the fuel cell, and the electric power supply control means supplies the second electric power to the first load from the secondary battery via the voltage conversion means, when the output voltage of the fuel cell becomes equal to or lower than a predetermine level.

Further, the fuel cell power supply device of the present invention comprises a voltage detecting means which detects the output voltage of the fuel cell, wherein the electric power supply control means charges the secondary battery by providing electric power to the secondary battery from the fuel cell via the voltage conversion means, when the output voltage of the fuel cell is equal to or more than a predetermined voltage.

According to the present invention, the electric power supply control means operates the voltage conversion means so as to supply electric power to the secondary battery from the fuel cell, when the output voltage of the fuel cell is equal to or more than the predetermined voltage, and when the supply of electric power to the first load from the fuel cell and the storage means is small, and charge the secondary battery. By doing so, it is possible to charge the secondary battery in the condition where the burden of the supply of electric power from the fuel cell and the storage means is small, so as to be prepared for the increase in the supply of electric power to the first load to happen thereafter.

Further, in the fuel cell power supply device of the present invention, the secondary battery is connected to a second load which at least includes an auxiliary for operating the fuel cell, and electric power is supplied to the second load from the secondary battery.

According to the present invention, for example, when a capacitor is used as the storage means, a fluctuation range of the output voltage of the secondary battery in accordance with increase and decrease of the state of charge thereof becomes smaller than that of the storage means. Therefore, by supplying electric power to the second load including at least the auxiliary of the fuel cell from the secondary battery and not from the storage means, it is possible to narrow the specification of the fluctuation range of the input voltage of the second load. By doing so, it is possible to downsize and decrease cost of the second load.

Further, the fuel cell power supply device of the present invention is mounted on a vehicle, and wherein the first load is an electric motor as a power source of the vehicle.

According to the present invention, by performing the assist of the supply of electric power to the electric motor with the secondary battery, it is possible to decrease the volume of the fuel cell and the storage means. Therefore, it is possible to decrease the space for the power source in the vehicle.

Further, the fuel cell power supply device of the present invention is mounted on a vehicle, the first load is an electric motor connected to an axle of the vehicle, which is a driving source of the vehicle and also operates as a generator during deceleration of the vehicle so as to output regenerative electric power, the voltage boosting means includes a function of energizing the storage means from the electric motor, and the electric power supply control means carries out a first charging of supplying the regenerative electric power to the storage means via the voltage boosting means, and a second charging of supplying the regenerative electric power to the secondary battery via the voltage conversion means.

According to the present invention, by charging the storage means and the secondary battery with the regenerative electric power of the electric motor, it is possible to secure the state of charge of the storage means and the secondary battery efficiently.

Further, the fuel cell power supply device of the present invention comprises a regenerative electric power detecting means which detects the regenerative electric power, wherein the electric power supply control means determines a distribution ratio of the regenerative electric power supplied to the storage means by the first charging and the regenerative electric power supplied to the secondary battery by the second charging, according to the level of the regenerative electric power detected by the regenerative electric power detecting means.

According to the present invention, it is possible to have charging modes according to the level of the regenerative electric power of the electric motor. For example, when the level of the regenerative electric power is small, only the first charging is carried out to charge only the storage means, and when the level of the regenerative electric power is large, the first charging and the second charging are carried out with the regenerative electric power distributed at a predetermined ratio. At this time, in order to carry out the first charging and the second charging, the regenerative output is adjusted to an optimum voltage value, respectively.

Further, in the fuel cell power supply device of the present invention, the storage means is a capacitor.

According to the present invention, the fuel cell may be used in a wide output voltage range, by directly connecting the capacitor having a wide output voltage range in parallel to the fuel cell. Further, the internal resistance of the capacitor is lower than other types of the storage means, such as the secondary battery. Therefore, it is possible to assist the output of the fuel cell efficiently, by carrying out the charging and discharging of the capacitor rapidly.

Further, in the fuel cell power supply device of the present invention, the storage means is connected in parallel to the output unit of the voltage boosting means, and is also connected to a second load which at least includes an auxiliary for operating the fuel cell, and electric power is supplied to the second load from the storage means.

According to the present invention, it is possible to carry out electric power output and charging of the storage means, by controlling the output voltage of the voltage boosting means.

### Brief Description of the Drawings

FIG. 1 shows a configuration of a fuel cell power supply device according to a first embodiment of the present invention.
FIG. 2 illustrates how electric power is supplied by the fuel cell power supply device shown in FIG. 1.
FIG. 3 illustrates how electric power is supplied in accordance with the running condition of the fuel cell automobile.
FIG. 4 illustrates how electric power is supplied in accordance with the running condition of the fuel cell automobile.
FIG. 5 illustrates how the regenerative electric power is recovered in accordance with the running condition of the fuel cell automobile.
FIG. 6 shows the configuration of the fuel cell power supply device according to a second and a third embodiment of the present invention.

### DETAILED DESCRIPTION OF THE PREFERRED EMBODIMENTS

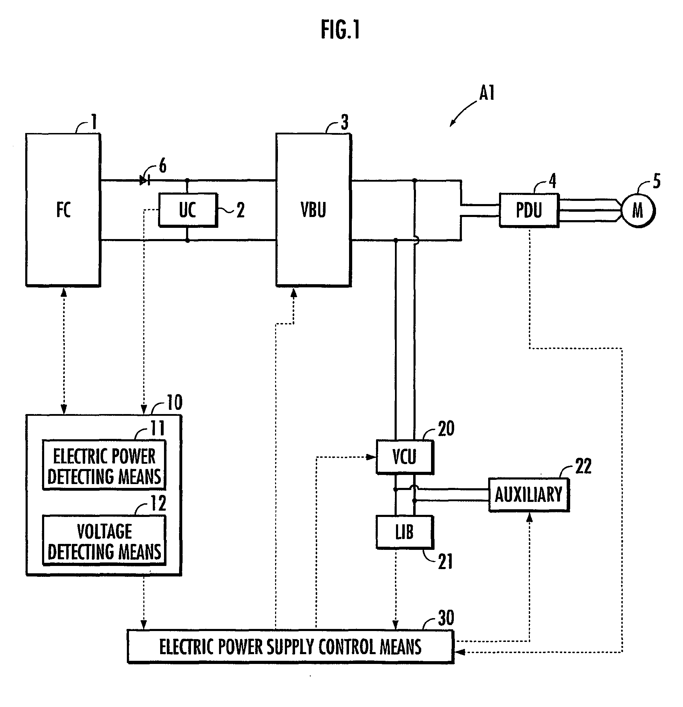

Embodiments of the present invention will now be explained below with reference to FIG. 1 through FIG. 6.

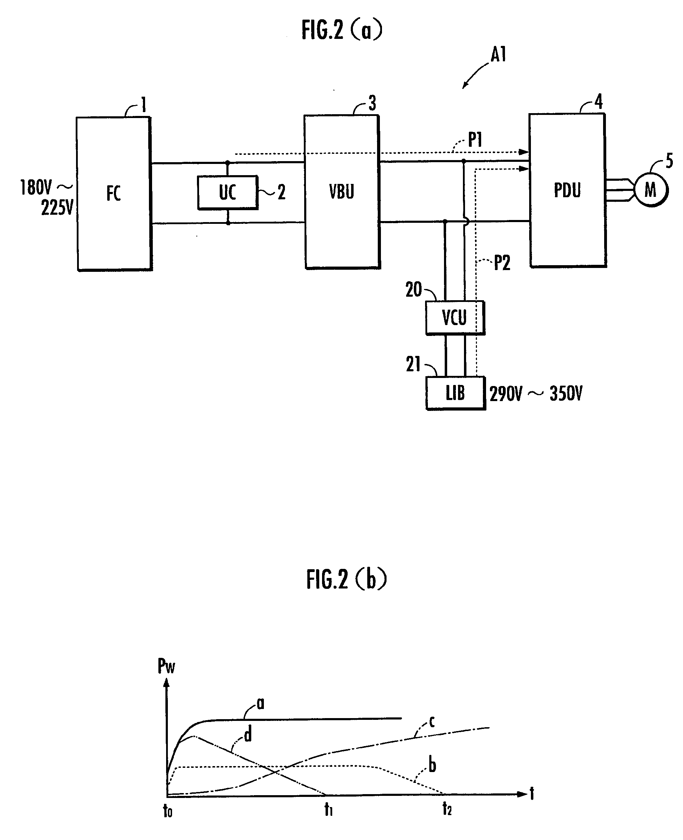

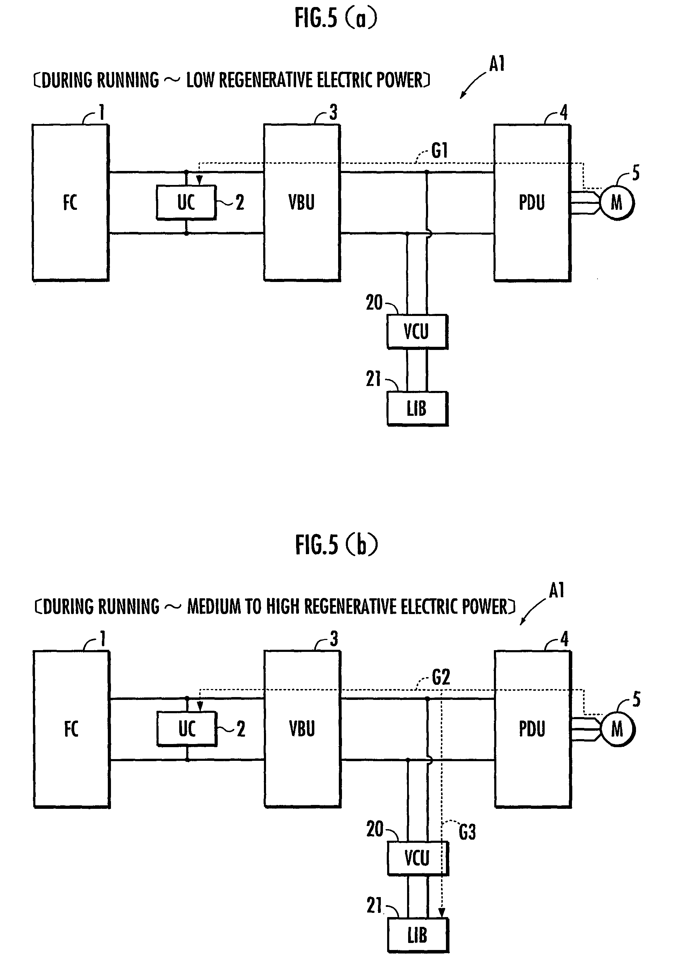

[First Embodiment] With reference to FIG. 1 through FIG. 5, a first embodiment of the present invention will now be explained below. FIG. 1 shows an overall configuration of a fuel cell power supply device according to a first embodiment of the present invention, FIG. 2 illustrates how electric power is supplied by the fuel cell power supply device shown in FIG. 1, FIG. 3 and FIG. 4 illustrate how electric power is supplied in accordance with the running condition of the fuel cell automobile, and FIG. 5 illustrates how the regenerative electric power is recovered in accordance with the running condition of the fuel cell automobile.

With reference to FIG. 1, a fuel cell power supply device A1 of the first embodiment is mounted on a fuel cell vehicle (corresponding to a vehicle of the present invention), and includes: a fuel cell 1; an electrical double layer capacitor 2 (corresponding to a storage means of the present invention, and hereinafter simply referred to as the capacitor 2) connected in parallel to the fuel cell 1; a voltage boosting means 3 (Voltage Boost Unit) having an input unit connected to the fuel cell 1 and the capacitor 2 and an output unit connected to an electric motor 5 (corresponding to a first load of the present invention) via a power drive unit (PDU) 4; and a voltage conversion means 20 having an input unit connected to the voltage boosting means 3 and an output unit connected to a secondary battery 21 (which is a lithium ion battery in the first embodiment).

Further, the fuel cell power supply device A1 is equipped with a fuel cell control means 10 which controls the operation of the fuel cell 1, and an electric power supply control means 30 which controls the operation of the voltage boosting means 3 and the voltage conversion means 20 to perform electric power supply to the electric motor 5 from the fuel cell 1, the capacitor 2, and the secondary battery 21, and to perform charging of the capacitor 2 and the secondary battery 21.

The fuel cell control means 10 and the electric power supply control means 30 are configured by causing a microcomputer (not shown) to execute a control program for the fuel cell power supply device. Further, the fuel cell control means 10 is connected to various sensors equipped to the fuel cell 1 and various sensors equipped to the capacitor 2. The fuel cell control means 10 is input with detection signals output from the sensors, and detects operation states of the fuel cell 1 and the capacitor 2.

An electric power detecting means 11 equipped to the fuel cell control means 10 detects, according to detection signals of a voltage sensor and a current sensor (not shown) equipped to the fuel cell 1 and detection signals of a voltage sensor and a current sensor (not shown) equipped to the capacitor 2, electric power output from the fuel cell 1 and electric power output from the capacitor 2. Further, a voltage detecting means 12 detects, according to a detection signal of the voltage sensor equipped to the fuel cell 1, an output voltage of the fuel cell 1.

Further, an auxiliary 22 (corresponding to a second load of the present invention) such as a pump for supplying air as a reactive gas to the fuel cell 1 is connected to the secondary battery 21. Still further, a diode 6 (corresponding to an one-way energization means of the present invention) for prohibiting inflow of an electric current into the fuel cell 1 is connected between the fuel cell 1 and the voltage boosting means 3 and the capacitor 2. The inflow of electric current into the fuel cell 1 may be prohibited by using other rectifying device such as a transistor rather than the diode or connecting the capacitor 2 to the fuel cell 1 via a step-down means (a down converter).

Next, with reference to FIG. 2(a), the fuel cell 1, which is composed, for example, of 250 fuel cell stacks connected in series, has an output voltage varying in a range from about 225 V (output current: 0A) to about 180 V (output current: 210A). Further, the capacitor 2, which is the electrical double layer capacitor, has an output voltage varying in a range around 200 V (with the lower limit of about 154 V and the upper limit of about 243 V). Still further, the secondary battery 21 has an output voltage varying in a range from about 290 V to about 350 V.

The voltage boosting means 3 is a DC/DC converter with a power rating of 100 kw and a step-up ratio of 1.5 to 2.4. The DC/DC converter has at least a voltage step-up function, and optionally has a voltage step-down function. Further, the voltage conversion means 20 is a two-way DC/DC converter with a power rating of 10 kw and a step-up ratio of 1.36 to 1.70. Still further, when an electric power P1 which is obtained by boosting the output electric power from the fuel cell 1 and the capacitor 2 by the voltage boosting means 3 is insufficient for supplying electric power to the electric motor 5, the electric power supply control means 30 (refer to FIG. 1) assists the electric power supply to the electric motor 5, by supplying an electric power P2 which is obtained by boosting the output electric power from the secondary battery 21 by the voltage conversion means 20.

FIG. 2(b) indicates the change in a total supplied electric power to the electric motor 5 ("a" in the figure), an output electric power of the secondary battery 21 ("b" in the figure), an output electric power of the fuel cell 1 ("c" in the figure), and an output electric power of the capacitor 2 ("d" in the figure), when the vehicle starts to run in a state in which the fuel cell 1 is stopped. In the figure, the vertical axis represents the electric power (Pw) and the horizontal axis represents time (t).

In the figure, when the vehicle starts to run at time to, first, the electric motor 5 is driven by the output electric power d of the capacitor 2 and the output electric power b of the secondary battery 21. Further, when the fuel cell 1 is started by the operation of the auxiliary 22 (refer to FIG. 1) with the output electric power b of the secondary battery 21, the output electric power c of the fuel cell 1 increases gradually. On the other hand, the output electric power d of the capacitor 2 decreases gradually, and approximately becomes zero at t₁. Further, the output electric power b of the secondary battery 21 also decreases gradually, and approximately becomes zero at t₂. Thereafter, the electric motor 5 is driven mainly by the output electric power c of the fuel cell 1.

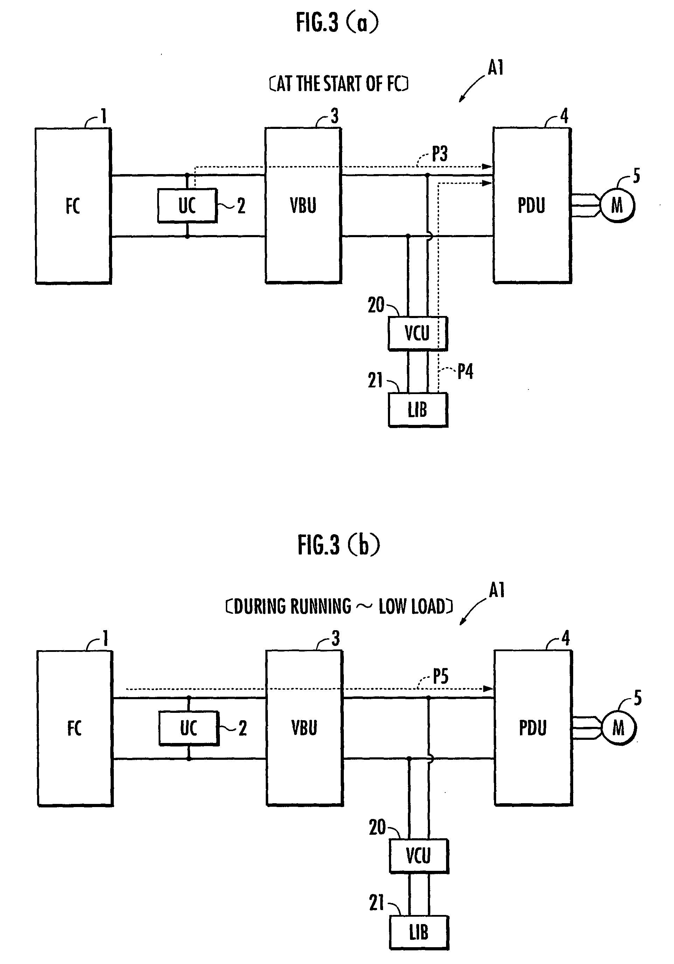

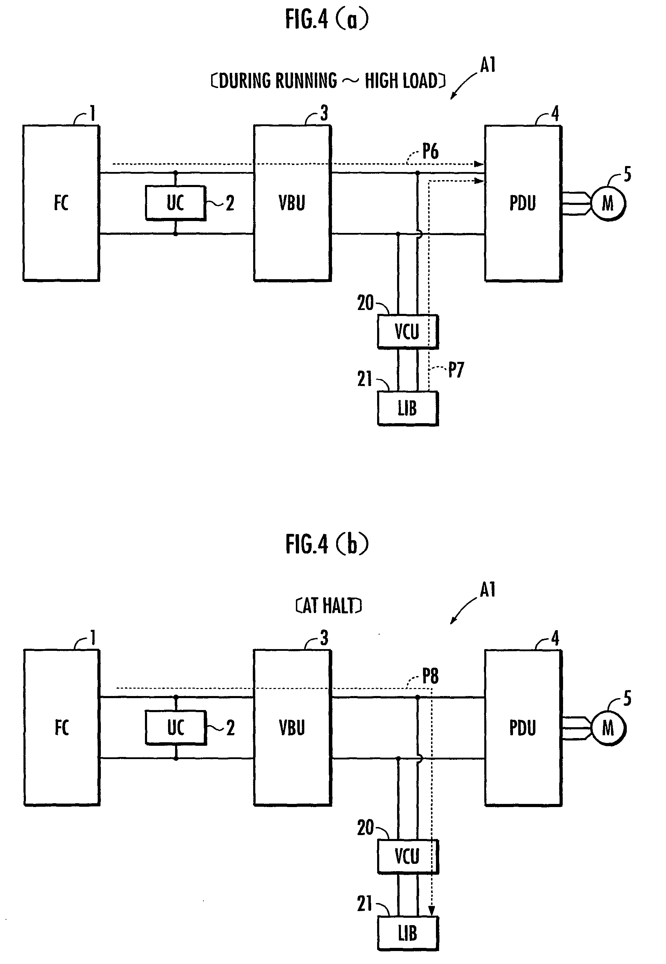

Next, with reference to FIG. 3(a), FIG. 3(b), FIG. 4(a), and FIG. 4(b), an explanation will be given on the mode of controlling the electric power output of the fuel cell 1, the capacitor 2, and the secondary battery 21 according to the condition of the vehicle.

FIG. 3(a) indicates the mode of electric power output at the start of the fuel cell 1. At the start of the fuel cell 1, the electric power supply control means 30 supplies an electric power P3 to the PDU 4 from the capacitor 2 via the voltage boosting means 3, and at the same time supplies an electric power P4 to the PDU 4 from the secondary battery 21 via the voltage conversion means 20.

In this case, the electric motor 5 is driven by the supplied electric power P3 from the capacitor 2 and the supplied electric power P4 from the secondary battery 21. Therefore, the capacity of the capacitor 2 may be decreased by the capacity corresponding to the electric power P4 assisted by the secondary battery 21, thereby making it possible to decrease the volume of the capacitor 2.

Further, electric power is supplied to the auxiliary 22 (refer to FIG. 1) from the secondary battery 21 so as to start operation thereof. Thereafter, the reactive gas is supplied to the fuel cell 1, so as to start operation of the fuel cell 1.

Next, FIG. 3(b) shows the mode of the electric power output during when the electric motor 5 is operating at a low load state, such as when the vehicle is running on a flat road. During low load state, it is possible to fulfill the required electric power of the electric motor 5 only from an electric power P5 from the fuel cell 1. Therefore, the electric power supply control means 30 stops operation of the voltage conversion means 20, and operates or stops the voltage boosting means 3 according to the magnitude of the load. As is stated above, by operating the electric motor 5 only with the supplied electric power P5 from the fuel cell 1, it is possible to run the vehicle while maintaining high fuel efficiency.

Next, FIG. 4(a) shows the mode of electric power output during when the electric motor 5 is operating at a high load state, such as when the vehicle is running on a climbing lane. During high load state, it is not possible to fulfill the required electric power of the electric motor 5 only from an electric power P6 supplied from the fuel cell and the capacitor 2.

Therefore, the electric power supply control means 30 operates the voltage conversion means 20, when the electric power P6 (corresponds to a first electric power of the present invention) supplied from the fuel cell 1 and the capacitor 2 and which is detected by the electric power detecting means 11 becomes equal to or more than a predetermined electric power set in advance. Then, the electric power supply control means 30 supplies an electric power P7 (corresponds to a second electric power of the present invention) which is the output electric power of the secondary battery 21 boosted at the voltage conversion means 20, so as to assist the electric power supply to the electric motor 5.

By doing so, the electric power supplied to the electric motor 5 from the PDU 4 is increased, so that it is possible to prevent occurrence of shortage of the electric power supplied to the electric motor 5. In this case, the capacity of the fuel cell 1 and the capacitor 2 may be decreased by the capacity corresponding to the electric power P7 assisted by the secondary battery 21, thereby making it possible to decrease the volume of the fuel cell 1 and the capacitor 2.

Here, it is possible to operate the voltage conversion means 20 when the rate of increase of the electric power P6 supplied from the fuel cell 1 and the capacitor 2 and which is detected by the electric power detecting means 11 becomes equal to or more than a predetermined level. By doing so, when the increase in the output electric power of the fuel cell 1 delays with respect to the rapid increase in the electric power P6, it is possible to prevent shortage of the supply of electric power to the electric motor 5, by assisting with the output electric power P7 of the secondary battery 21.

Next, FIG. 4(b) shows the mode of the electric power output when the running vehicle stops. When the vehicle is in a stopped state, the electric motor 5 stops and the output electric power of the fuel cell 1 decreases. In accordance thereto, the output voltage of the fuel cell 1 increases.

Therefore, when the output voltage of the fuel cell 1 detected by the voltage detecting means 12 becomes equal to or more than a predetermined electric voltage set in advance, and when the output of the fuel cell 1 is in a state including a margin, the electric power supply control means 30 operates an voltage conversion circuit 20, so as to charge the secondary battery 21 via the voltage boosting means 3 and the voltage conversion means 20.

By doing so, it is possible to make the remaining battery level of the secondary battery 21 sufficient, and be prepared for the running of the vehicle thereafter.

Further, the electric motor 5 functions as a generator when the vehicle decelerates, and the electric power supply control means 30 recovers a regenerative electric power generated at the electric motor 5 during deceleration of the vehicle, and carries out a first charging of charging the capacitor 2 and a second charging of charging the secondary battery 21 with the regenerative electric power. Here, the electric power supply control means 30 detects the regenerative electric power of the electric motor 5 from a voltage sensor and a current sensor provided to the PDU 4 (not shown). As is explained above, the configuration of detecting the regenerative electric power of the electric motor 5 corresponds to the regenerative electric power detecting means of the present invention.

FIG. 5(a) shows the charging mode by the regenerative electric power when the regenerative electric power of the electric motor 5 is small, such as when the vehicle is gradually decelerating. When the regenerative electric power is small, the electric power supply control means 30 stops the electric power supply to the secondary battery 21 via the voltage conversion means 20, and sets the voltage boosting means 3 in a direct-coupled (through) state. By doing so, it is possible to charge a regenerative electric power G1 of the electric motor 5 to the capacitor 2 having low input impedance effectively.

Next, FIG. 5 (b) shows the state of charge by the regenerative electric power when the regenerative electric power of the electric motor 5 is large, such as when the vehicle decelerates from a high-speed running state. In this case, the electric power supply control means 30 distributes the regenerative electric power of the electric motor 5 to G2 and G3. Thereafter, the electric power supply control means 30 supplies the regenerative electric power G2 to the capacitor 2 via the voltage boosting means 3 so as to charge the capacitor 2, and supplies the regenerative electric power G3 to the secondary battery 21 via the voltage conversion means 20 so as to charge the secondary battery 21.

The electric power supply control means 30 determines the distribution ratio of the regenerative electric power G2 and G3 on the basis of the remaining charging capacity of the secondary battery 21, the remaining charging capacity of the capacitor 2, the magnitude of the regenerative electric power of the electric motor 5 and the like. Then, by limiting the electric power supplied to the secondary battery 21 by the voltage conversion means 20, the distribution ratio between the regenerative electric power G2 and G3 is controlled.

Here, in the first embodiment, the electrical double layer capacitor is identified as the capacitor of the present invention. However, the specification of the capacitor of the present invention is not limited thereto, and capacitors of other specifications may also be used.

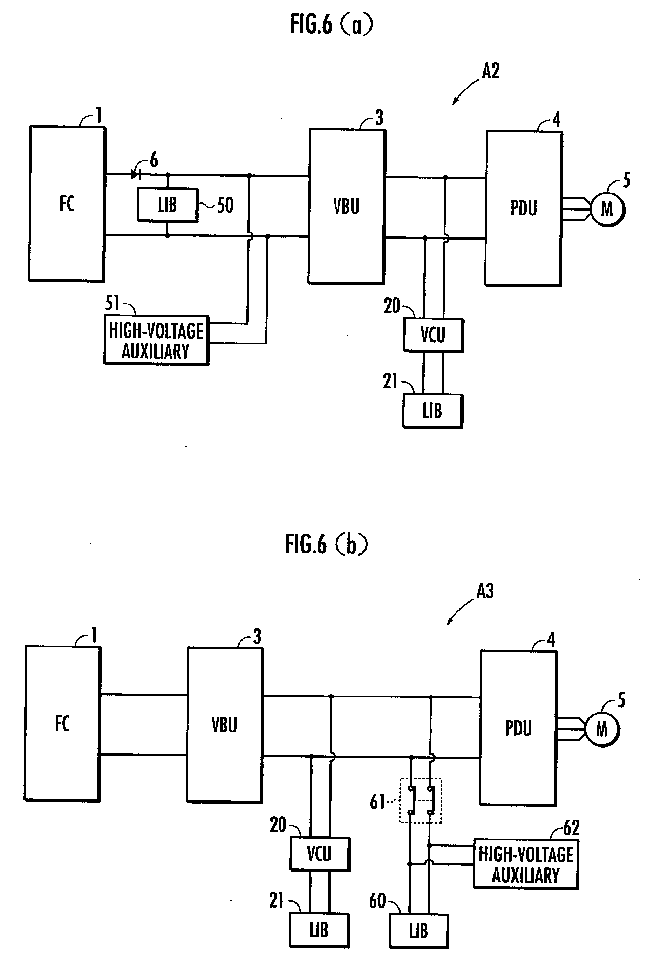

[Second embodiment] Next, with reference to FIG. 6(a), an explanation will be given on a second embodiment of the present invention. A fuel cell power supply device A2 of the second embodiment is a device in which the capacitor 2 of the fuel cell power supply device A1 mentioned in the first embodiment explained above is substituted by a secondary battery 50 (corresponds to the storage means of the present invention; a lithium ion battery is used in the second embodiment). Here, the configurations which are the same as the fuel cell power supply device A1 in the first embodiment are denoted by the same reference numerals and explanation thereof is omitted.

The fuel cell power supply device A2 of the second embodiment is capable of obtaining the same effect as the fuel cell power supply device A1 of the first embodiment mentioned above. The secondary battery 50 is, for example, when the operating voltage range of the fuel cell 1 is in the range of from about 180 V to about 225 V, configured by connecting 65 cells of lithium ion battery in series. Here, in the secondary battery 50, there is a fear that deterioration in an active material or a collecting foil may occur, when discharge below lower limit voltage is carried out.

Therefore, it is preferable to prevent the output voltage of the secondary battery 50 from dropping below the lower limit voltage, by carrying out monitoring of the output voltage of the secondary battery 50, and by carrying out control of limiting the current output of the fuel cell 1 and the secondary battery 50 by the voltage boosting means 3 connected to the fuel cell 1.

Further, according to the fuel cell power supply device A2 of the second embodiment, by connecting a high-voltage auxiliary 51 (the auxiliary which operates with supply of high voltage, and includes the auxiliary of the fuel cell 1; corresponds to the second load of the present invention) in parallel to the secondary battery 50, it is possible to supply electric power to the high-voltage auxiliary 51 from the secondary battery 50 without the need for intervening the voltage conversion circuit such as a DC/DC converter. Therefore, it is possible to operate the high-voltage auxiliary 51 efficiently, and to improve the fuel efficiency.

[Third embodiment] Next, with reference to FIG. 6(b), an explanation will be given on a third embodiment of the present invention. The fuel cell power supply device A3 of the third embodiment is the device in which a capacitor of the fuel cell power supply device A1 mentioned in the first embodiment explained above is substituted by a secondary battery 60 (corresponds to the storage means of the present invention; a lithium ion battery is used in the third embodiment) which is connected in parallel to the output unit of the voltage boosting means 3. Here, the configurations which are the same as the fuel cell power supply device A1 in the first embodiment are denoted by the same reference numerals and explanation thereof is omitted.

Further, a contactor 61 is provided between the voltage boosting means 3 and the PDU 4 and the secondary battery 60, and a high-voltage auxiliary 62 (the auxiliary which operates with supply of high voltage, and includes the auxiliary of the fuel cell 1; corresponds to the second load of the present invention) is connected to the secondary battery 60. Here, the secondary battery 21 and the secondary battery 60 differs in the setting of the operating voltage range, and the operating voltage range of the secondary battery 60 is higher than the operating voltage range of the secondary battery 21.

For example, when the operating voltage range of the fuel cell 1 is in the range of from about 180 V to about 225 V, the secondary battery 21 is configured by connecting 72 cells of lithium ion battery in series, and the secondary battery 60 is configured by connecting 116 cells of lithium ion battery in series.

According to the fuel cell power supply device A3 of the third embodiment, when the assist of the output electric power of the fuel cell 1 is carried out only by the secondary battery 21, the output voltage to the PDU 4 from the voltage boosting means 3 may be controlled to be equal to or more than 400 V, and as well as the output voltage to the PDU 4 from the voltage conversion means 20 may be controlled to be equal to or more than 400 V.

Further, when the assist of the output electric power of the fuel cell 1 is carried out by both the secondary battery 21 and the secondary battery 60, it is possible to arbitrarily control the output electric power of the secondary battery 60 by controlling the output voltage to the PDU 4 from the voltage boosting means 3 to be less than 400 V, and as well as controlling the output voltage to the PDU 4 from the voltage conversion means 20 to be less than 400 V.

On the other hand, when charging the secondary battery 21 only by the regenerative electric power of the electric motor 5, it may be carried out by supplying electric power to the secondary battery 21 from the electric motor 5 via the PDU 4, while switching the contactor 61 to an opened state (in a state cutting off between the PDU 4 and the secondary battery 60).

Further, when charging both the secondary battery 21 and the secondary battery 60 by the regenerative electric power of the electric motor 5, it may be carried out by making the output voltage to the secondary battery 60 from the PDU 4 to be equal to or more than 400 V, while switching the contactor 61 to a closed state (in a state conducting the PDU 4 and the secondary battery 60).

According to the fuel cell power supply device A3 of the third embodiment, it is possible to supply electric power to the PDU 4 from the secondary battery 60 efficiently, without intervening the voltage conversion circuit such as the DC/DC converter. Therefore, it is possible to improve fuel efficiency when the vehicle is running while stopping power generation at the fuel cell 1.

Further, because the high-voltage auxiliary 62 is connected to the secondary battery 60 without intervening the voltage conversion circuit such as the DC/DC converter, it is possible to operate the high-voltage auxiliary 62 efficiently by the electric power output from the secondary battery 60.

Here, in the first to third embodiments mentioned above, the examples where the fuel cell power supply device of the present invention is equipped as the driving source of the vehicle are given. However, the present invention is applicable to a fuel cell power supply device of a configuration of supplying output electric power of the fuel cell to an electric load.

Further, in the first to third embodiments mentioned above, the electric motor 5 is identified as the first load of the present invention and the auxiliary 22 of the fuel cell 1 is identified as the second load of the present invention. However, the first load and the second load may be electrical components such as an air conditioning equipment and audio equipped in the vehicle, or a battery and the like. Further, the auxiliary of the fuel cell 1 includes a pump for supplying air which is the reactive gas to the fuel cell 1, a humidifying device for moisturizing the electrolyte membrane of the fuel cell 1, and a water-cooling circulating pump of a radiator of the fuel cell 1.

Further, as the storage means of the present invention, the capacitor 2 (electrical double layer capacitor) is used in the first embodiment, and the secondary batteries 50 and 60 (lithium ion batteries) are used in the second and the third embodiment. However, other type of the storage means may also be used.

### Industrial applicability

As is explained above, the fuel cell power supply device of the present invention is capable of downsizing the overall device while maintaining high output, so that it is useful in configuring the fuel cell power supply device.

## Claims

1. A fuel cell power supply device, comprising:
a fuel cell (1);
a voltage boosting means (3) having an input unit connected in parallel to the fuel cell (1) and an output unit connected to a first load(5), which boosts an output voltage of the fuel cell (1) and supplies electric power obtained from the boosted voltage to the first load (5);
a storage means (2) which is connected in parallel to the input unit or the output unit of the voltage boosting means (3);
a secondary battery (21; 50) which is connected to the output unit of the voltage boosting means (3) via a voltage conversion means (20); and
an electric power supply control means (30) which controls the operation of the voltage conversion means (20), in order to carry out the supply of electric power to the first load (5) from the secondary battery (21; 50) via the voltage conversion means (20), and to carry out charging of the secondary battery (21; 50) by the supply of electric power to the secondary battery (21; 50) from the voltage boosting means (3) via the voltage conversion means (20).

2. The fuel cell power supply device according to Claim 1, wherein the storage means (2) is connected in parallel to the input unit of the voltage boosting means (3), and
the fuel cell power supply device further comprising an electric power detecting means (11) which detects a first electric power supplied to the first load (5) from the fuel cell(1) and the storage means (2) via the voltage boosting means (3),
wherein the electric power supply control means (30) supplies a second electric power to the first load (5) from the secondary battery (21) via the voltage conversion means (20), when the first electric power is equal to or more than a predetermined electric power.

3. The fuel cell power supply device according to Claim 1, wherein the storage means (2) is connected in parallel to the input unit of the voltage boosting means (3), and
the fuel cell power supply device further comprising an electric power detecting means (11) which detects a first electric power supplied to the first load (5) from the fuel cell (1) and the storage means (2) via the voltage boosting means (3),
wherein the electric power supply control means (30) supplies a second electric power to the first load (5) from the secondary battery (21) via the voltage conversion means (20), when a rate of increase of the first electric power is equal to or more than a predetermined level.

4. The fuel cell power supply device according to Claim 1, wherein the storage means (2) is connected in parallel to the input unit of the voltage boosting means (3), wherein
the device is mounted on a vehicle,
the first load(5) is an electric motor (5) connected to an axle of the vehicle, which is a driving source of the vehicle and also operates as a generator during deceleration of the vehicle so as to output regenerative electric power,
the voltage boosting means (3) includes a function of energizing the storage means (2) from the electric motor (5), and
the electric power supply control means (30) carries out a first charging (G1) of supplying the regenerative electric power to the storage means (2) via the voltage boosting means (3), and a second charging (G3) of supplying the regenerative electric power to the secondary battery (21) via the voltage conversion means (20).

5. The fuel cell power supply device according to Claim 4, comprising a regenerative electric power detecting means (30) which detects the regenerative electric power,
wherein the electric power supply control means (30) determines a distribution ratio of the regenerative electric power supplied to the storage means (2) by the first charging (G1) and the regenerative electric power supplied to the secondary battery (21; 50) by the second charging (G3), according to the level of the regenerative electric power detected by the regenerative electric power detecting means (30).

## Patentansprüche

1. Brennstoffzellenstromversorgungsvorrichtung, umfassend:
eine Brennstoffzelle (1);
ein Spannungsverstärkermittel (3), das eine Eingangseinheit, die parallel zur Brennstoffzelle (1) geschaltet ist, und eine Ausgangseinheit,
die mit einer ersten Last (5) verbunden ist, aufweist, das eine Ausgangsspannung der Brennstoffzelle (1) verstärkt und aus der verstärkten Spannung erhaltene elektrische Energie der ersten Last (5) zuführt;
ein Speichermittel (2), das parallel zu der Eingangseinheit oder der Ausgangseinheit des Spannungsverstärkermittels (3) geschaltet ist;
eine Sekundärbatterie (21; 50), die mit der Ausgangseinheit des Spannungsverstärkermittels (3) über ein Spannungswandlermittel (20) verbunden ist; und
ein elektrisches Stromversorgungs-Steuermittel (30), das den Betrieb des Spannungswandlermittels (20) steuert/regelt, um die elektrische Stromversorgung von der Sekundärbatterie (21; 50) über das Spannungswandlermittel (20) zu der ersten Last (5) auszuführen und
um das Laden der Sekundärbatterie (21; 50) durch die elektrische Stromversorgung von dem Spannungsverstärkermittel (3) über das Spannungswandlermittel (20) zu der Sekundärbatterie (21; 50) auszuführen.

2. Die Brennstoffzellenstromversorgungsvorrichtung nach Anspruch 1, worin das Speichermittel (2) parallel zur Eingangseinheit des Spannungsverstärkermittels (3) geschaltet ist, und
die Brennstoffzellenstromversorgungsvorrichtung ferner ein Elektrische-Energie-Erfassungsmittel (11) aufweist, das eine erste elektrische Energie erfasst, die von der Brennstoffzelle (1) und dem Speichermittel (2) über das Spannungsverstärkermittel (3) der ersten Last (5) zugeführt wird,
worin das elektrische Stromversorgungs-Steuermittel (30) eine zweite elektrische Energie von der Sekundärbatterie (21) über das Spannungswandlermittel (20) der ersten Last (5) zuführt, wenn die erste elektrische Energie gleich oder größer als eine vorbestimmte elektrische Energie ist.

3. Die Brennstoffzellenstromversorgungsvorrichtung nach Anspruch 1, worin das Speichermittel (2) parallel zur Eingangseinheit des Spannungsverstärkermittels (3) geschaltet ist, und
die Brennstoffzellenstromversorgungsvorrichtung ferner ein Elektrische-Energie-Erfassungsmittel (11) aufweist, das eine erste elektrische Energie erfasst, die von der Brennstoffzelle (1) und dem Speichermittel (2) über das Spannungsverstärkermittel (3) der ersten Last (5) zugeführt wird,
worin das elektrische Stromversorgungs-Steuermittel (30) eine zweite elektrische Energie von der Sekundärbatterie (21) über das Spannungswandlermittel (20) der ersten Last (5) zuführt, wenn eine Zunahmerate der ersten elektrischen Energie gleich oder größer als ein vorbestimmter Wert ist.

4. Die Brennstoffzellenstromversorgungsvorrichtung nach Anspruch 1, worin das Speichermittel (2) parallel zur Eingangseinheit des Spannungsverstärkermittels (3) geschaltet ist, worin die Vorrichtung in einem Fahrzeug angebracht ist,
die erste Last (5) ein an einer Achse des Fahrzeugs angeschlossener Elektromotor (5) ist, der eine Antriebsquelle des Fahrzeugs ist und auch während Verzögerung des Fahrzeugs als Generator arbeitet, um regenerative elektrische Energie auszugeben,
das Spannungsverstärkermittel (3) eine Funktion enthält, das Speichermittel (2) von dem Elektromotor (5) aus mit Energie zu versorgen, und
das elektrische Stromversorgungs-Steuermittel (30) ein erstes Laden (G1) der Zufuhr der regenerativen elektrischen Energie zu dem Speichermittel (3) über das Spannungsverstärkermittel (3) ausführt, und ein zweites Laden (G3) der Zufuhr der regenerativen elektrischen Energie zu der Sekundärbatterie (21) über das Spannungswandlermittel (20) ausführt.

5. Die Brennstoffzellenstromversorgungsvorrichtung nach Anspruch 4, die ein Elektrische-Regenerativenergie-Erfassungsmittel (30) aufweist, das die regenerative elektrische Energie erfasst,
worin das elektrische Stromversorgungs-Steuermittel (30) ein Verteilungsverhältnis der dem Speichermittel (2) durch das erste Laden (G1) zugeführten regenerativen elektrischen Energie und der der Sekundärbatterie (21; 50) durch das zweite Laden (G3) zugeführten regenerativen elektrischen Energie gemäß der vom Elektrische-Regenerativenergie-Erfassungsmittel (30) erfassten Pegel der regenerativen elektrischen Energie bestimmt.

## Revendications

1. Dispositif d'alimentation de pile à combustible comprenant :
une pile à combustible (1) ;
des moyens de suralimentation en tension (3) ayant une unité d'entrée connectée en parallèle à la pile à combustible (1) et une unité de sortie connectée à une première charge (5), lesquels suralimentent une tension de sortie de la pile à combustible (1) et délivrent une énergie électrique obtenue à partir de la tension suralimentée à la première charge (5) ;
des moyens de stockage (2) qui sont connectés en parallèle à l'unité d'entrée ou à l'unité de sortie des moyens de suralimentation en tension (3) ;
une batterie secondaire (21 ; 50) qui est connectée à l'unité de sortie des moyens de suralimentation en tension (3) via des moyens de conversion de tension (20) ; et
des moyens de contrôle d'alimentation d'énergie électrique (30) qui contrôlent le fonctionnement des moyens de conversion de tension (20), de manière à exécuter l'alimentation d'énergie électrique pour la première charge (5) à partir de la batterie secondaire (21 ; 50) via les moyens de conversion de tension (20), et à exécuter la charge de la batterie secondaire (21 ; 50) par l'alimentation d'énergie électrique à la batterie secondaire (21 ; 50) à partir des moyens de suralimentation en tension (3) via les moyens de conversion de tension (20).

2. Dispositif d'alimentation de pile à combustible selon la revendication 1, dans lequel les moyens de stockage (2) sont connectés en parallèle à l'unité d'entrée des moyens de suralimentation en tension (3), et
le dispositif d'alimentation de pile à combustible comprend en outre des moyens de détection d'énergie électrique (11) qui détectent une première énergie électrique délivrée à la première charge (5) à partir de la pile à combustible (1) et des moyens de stockage (2) via les moyens de suralimentation en tension (3),
dans lequel les moyens de contrôle d'alimentation d'énergie électrique (30) délivrent une deuxième énergie électrique à la première charge (5) à partir de la batterie secondaire (21) via les moyens de conversion de tension (20), quand la première énergie électrique est égale ou supérieure à une énergie électrique prédéterminée.

3. Dispositif d'alimentation de pile à combustible selon la revendication 1, dans lequel les moyens de stockage (2) sont connectés en parallèle à l'unité d'entrée des moyens de suralimentation en tension (3), et
le dispositif d'alimentation de pile à combustible comprend en outre des moyens de détection d'énergie électrique (11) qui détectent une première énergie électrique délivrée à la première charge (5) à partir de la pile à combustible (1) et des moyens de stockage (2) via les moyens de suralimentation en tension (3),
dans lequel les moyens de contrôle d'alimentation d'énergie électrique (30) délivrent une deuxième énergie électrique à la première charge (5) à partir de la batterie secondaire (21) via les moyens de conversion de tension (20), quand une vitesse d'augmentation de la première énergie électrique est égale ou supérieure à un niveau prédéterminé.

4. Dispositif d'alimentation de pile à combustible selon la revendication 1, dans lequel les moyens de stockage (2) sont connectés en parallèle à l'unité d'entrée des moyens de suralimentation en tension (3), dans lequel
le dispositif est monté sur un véhicule,
la première charge (5) est un moteur électrique (5) connecté à un essieu du véhicule, lequel est une source motrice du véhicule et fonctionne également comme un générateur durant la décélération du véhicule de manière à délivrer une énergie électrique de régénération,
les moyens de suralimentation en tension (3) comprennent une fonction pour alimenter les moyens de stockage (2) à partir du moteur électrique (5), et
les moyens de contrôle d'alimentation d'énergie électrique (30) exécutent une première charge (G1) d'alimentation de l'énergie électrique de régénération aux moyens de stockage (2) via les moyens de suralimentation en tension (3) et une deuxième charge (G3) d'alimentation de l'énergie électrique de régénération à la batterie secondaire (21) via les moyens de conversion de tension (20).

5. Dispositif d'alimentation de pile à combustible selon la revendication 4, comprenant des moyens de contrôle d'alimentation d'énergie électrique (30) qui détecte l'énergie électrique de régénération,
dans lequel les moyens de détection d'énergie électrique de régénération (30) détermine un rapport de distribution de l'énergie électrique de régénération délivrée aux moyens de stockage (2) par la première charge (G1) et l'énergie électrique de régénération délivrée à la batterie secondaire (21 ; 50) par la deuxième charge (G3) en fonction du niveau d'énergie électrique de régénération détectée par les moyens de détection d'énergie électrique de régénération (30).
